# EUROPÄISCHE PATENTSCHRIFT

(11) **EP 2 416 993 B1**
(45) Veröffentlichungstag und Bekanntmachung des Hinweises auf die Patenterteilung: **16.01.2013**
(21) Anmeldenummer: 10710853.2
(22) Anmeldetag: 26.03.2010
(51) Int. Cl.: B60T 7/04, B60T 7/10, B60T 7/12, B60T 13/02, B60T 13/74, B60T 17/22, B60T 7/08

(54) **VERFAHREN ZUM BETREIBEN EINER BREMSANLAGE, BREMSANLAGE UND KRAFTFAHRZEUG MIT BREMSANLAGE**
METHOD FOR OPERATING A BRAKING SYSTEM, BRAKING SYSTEM AND MOTOR VEHICLE HAVING BRAKING SYSTEM
PROCÉDÉ DE FONCTIONNEMENT D'UN SYSTÈME DE FREINAGE, SYSTÈME DE FREINAGE ET VÉHICULE AUTOMOBILE DOTÉ D'UN SYSTÈME DE FREINAGE

(30) Priorität: 06.04.2009 DE 102009002211; 25.03.2010 DE 102010003232
(43) Veröffentlichungstag der Anmeldung: 15.02.2012
(73) Patentinhaber: Continental Teves AG & Co. oHG, 60488 Frankfurt (DE); Leideck, Jochen, 64283 Darmstadt (DE)
(72) Erfinder: LEIDECK, Jochen, 64283 Darmstadt (DE); ROLL, Georg Dr., 60438 Frankfurt (DE)
(86) Internationale Anmeldenummer: PCT/EP2010/053982
(87) Internationale Veröffentlichungsnummer: WO 2010/115729

(56) Entgegenhaltungen:
- EP-A1- 1 967 434
- WO-A1-2009/013193
- WO-A1-2009/053429
- DE-A1-102008 024 180
- DE-A1-102008 033 309

## Beschreibung

Die Erfindung betrifft ein Verfahren zum Betreiben einer Bremsanlage, insbesondere einer Bremsanlage in einem Kraftfahrzeug, mit wenigstens zwei jeweils durch einen, insbesondere nicht selbsthemmenden, elektromechanischen Aktuator betätigbaren Radbremsen, welche jeweils eine Verriegelungsvorrichtung zur Umsetzung einer Parkbremsfunktionalität umfassen, bei welcher der jeweilige elektromechanische Aktuator zunächst zugespannt wird und danach durch die Verriegelungsvorrichtung verriegelt wird. Sie betrifft ferner eine zugehörige Bremsanlage und ein Kraftfahrzeug mit einer derartigen Bremsanlage.

Aus der EP 1967434 A1 ist ein Fahrzeugparksystem bekannt, welches einen Parksperrmechanismus mit einem ersten elektromagnetisch angetriebenen Aktuator, der eine Drehung einer Antriebsenergieübertragungswelle durch Betreiben des ersten elektromagnetisch angetriebenen Aktuators unterbricht, und einen Parkbremsmechanismus umfasst, der eine Radbremse und einen zweiten elektromagnetisch angetriebenen Aktuator umfasst und die Radbremse durch Betreiben des zweiten elektromagnetisch angetriebenen Aktuators anwendet, um eine Drehung des Rads zu unterdrücken. Dabei werden der erste elektromagnetisch angetriebene Aktuator und der zweite elektromagnetisch angetriebene Aktuator zu versetzten Zeiten gestartet, wenn sowohl der Parksperrmechanismus als auch der Parkbremsmechanismus betrieben werden.

Zur Realisierung einer Parkbremsfunktionalität bei Kraftfahrzeugen werden gewöhnlich zwei Aktuatoren der Betriebsbremse mittels einer geeigneten Vorrichtung fixiert. Um das

Fahrzeug zu halten, wird dann über Aktuatoren der Betriebsbremse eine Zuspannkraft aufgebracht und diese anschließend mechanisch verriegelt. Das Aufbringen der Zuspannkraft erfordert eine Leistung, die vom Bordnetz zur Verfügung gestellt werden muss. Die größte Leistung wird dabei nicht für das Halten der einzustellenden Zuspannkraft benötigt, sondern für das Beschleunigen der Massen. Werden zwei Aktuatoren gleichzeitig angesteuert, so verdoppelt sich in erster Näherung die aufzubringende Leistung.

Verfügt das Fahrzeug nur noch über ein schwaches Bordnetz und es liegt eine Anforderung für das Aktivieren der Parkbremsfunktion vor, so kann eine gleichzeitige Aktivierung beider Aktuatoren zu einem Ausfall des Bordnetzes führen. Im Folgenden habe das Fahrzeug exemplarisch zwei die Parkbremsfunktion realisierende Aktuatoren.

Zur Reduzierung der aufzubringenden elektrischen Leistung ist es möglich, die beiden Aktuatoren, welche die Feststellbremsfunktion realisieren, jeweils nacheinander zuzuspannen und zu verriegeln. Das heißt, zuerst wird der erste Aktuator zugespannt und verriegelt, dann wird der zweite Aktuator zugespannt und verriegelt.

Dieser Ansatz kann bei einem schwachen oder einem in seiner Funktion beeinträchtigten Bordnetz zu der folgenden, nachteiligen Situation führen. Das Fahrzeug steht z. B. an einer Neigung, welche so groß ist, dass die Fahrzeugmasse nicht durch eine Feststellbremse allein gehalten werden kann. Nun wird zur Bordnetzschonung zunächst eine Feststellbremse verriegelt. Ehe die zweite verriegelt werden kann, bricht nun das Bordnetz endgültig zusammen, so dass auch die für das Lösen der bereits verriegelten Parkbremse erforderliche Leistung nicht mehr zur Verfügung steht.

Das Fahrzeug kann in dieser Situation durch die eine verriegelte Parkbremse bzw. Feststellbremse am Hang nicht gehalten werden. Gleichzeitig kann der Fahrer das Fahrzeug aufgrund der nur einen verriegelten Parkbremse nicht mehr bewegen. Das Auto fängt also im schlimmsten Fall an, unkontrolliert zu rutschen. Ein solcher Vorgang kann schwere Personen- und Sachschäden hervorrufen. Weiterhin kann das Fahrzeug in einem solchen Zustand nicht von einem anderen Kraftfahrzeug, beispielsweise mit Hilfe eines Abschleppseils oder einer Abschleppstange, abgeschleppt werden.
Der Erfindung liegt daher die Aufgabe zugrunde, ein Verfahren zum Betreiben einer Bremsanlage bereitzustellen, das Zustände von Kraftfahrzeugen, in denen das Kraftfahrzeug weder sicher abgestellt ist noch manövrierfähig ist, zuverlässig verhindern. Weiterhin soll eine zugehörige Bremsanlage angegeben werden, in der ein derartiges Verfahren durchgeführt werden soll sowie ein Kraftfahrzeug mit einer derartigen Bremsanlage.

In Bezug auf das Verfahren wird die oben genannte Aufgabe erfindungsgemäß dadurch gelöst, dass bei der Durchführung einer Parkbremsfunktion ein erster Verfahrensschritt durchgeführt wird, bei dem die wenigstens zwei Aktuatoren nacheinander zugespannt werden, und anschließend ein zweiter Verfahrensschritt durchgeführt wird, bei dem überprüft wird, ob die wenigstens zwei Aktuatoren eine jeweils vorgegebene Zuspannkraft aufweisen, und in dem Fall, dass die wenigstens zwei Aktuatoren eine jeweils vorgegebene Zuspannkraft aufweisen, in einem dritten Verfahrensschritt die wenigstens zwei Aktuatoren verriegelt werden.

Vorteilhafte Ausgestaltungen der Erfindung sind Gegenstand der Unteransprüche.

Die Erfindung geht von der Überlegung aus, dass eine unverzichtbare Sicherheitsanforderung an moderne Kraftfahrzeuge darin besteht, dass sie auf zuverlässige Weise abgestellt bzw. geparkt werden können. Insbesondere an steilen Hängen bzw. bei abschüssigem Untergrund muss die dazu vorgesehene Feststellbremse/Parkbremse oder Feststellbremsfunktion das Kraftfahrzeug gegen Wegrutschen sichern. Gleichzeitig darf eine Fehlfunktion der Feststellbremse nicht dazu führen, dass das Fahrzeug (beschränkt) manövrierunfähig und unkontrollierbar wird.
In modernen Kraftfahrzeugen finden zunehmend elektromechanische (elektromechanisch betätigbare) Bremsen Verwendung, bei denen ein elektrisch angetriebener Aktuator (beispielsweise in Form eines Elektromotors) die Bremse zuspannt. Die für das Zuspannen benötigte elektrische Leistung wird dabei dem Bordnetz entnommen.

Bei derartigen Bremssystemen besteht nun die Gefahr, dass bei schwachem Bordnetz das Bordnetz zusammenbricht, bevor alle Bremsen ordnungsgemäß zugespannt und verriegelt werden können. Dies kann, wie oben erwähnt, zur Folge haben, dass das Kraftfahrzeug nur unzureichend gegen Wegrutschen gesichert ist und bei einem Rutschvorgang umstehende Personen gefährdet.

Wie nunmehr erkannt wurde, lässt sich dieser Zustand vermeiden, indem von dem Bordnetz zu jedem Zeitpunkt während des Abstellvorgangs nur eine geringstmögliche Leistung angefordert wird: Die Aktuatoren werden nacheinander zugespannt. Somit wird gleichzeitig immer nur die Leistung für einen einzigen Zuspannvorgang angefordert. Weiterhin lässt sich durch eine Überprüfung der Zuspannkraft vor dem Verriegeln vermeiden, dass einzelne Aktuatoren verriegelt werden, obwohl sie nicht die geforderte Zuspannkraft erreicht haben. Bei einem möglichen Zusammenbruch des Bordnetzes in einer solchen Situation lassen sich die Aktuatoren dann nicht mehr entriegeln und das Fahrzeug ist manövrierunfähig und gleichzeitig nicht sicher abgestellt.
In dem Fall, dass nicht alle Aktuatoren eine vorgegebene Zuspannkraft aufweisen, werden vorteilhafterweise in einem dritten Schritt alle Aktuatoren gelöst bzw. geöffnet. Hierdurch kann vermieden werden, dass das Kraftfahrzeug anfängt sich zu drehen und/oder zu rutschen, da beispielsweise nur eine Bremse ordnungsgemäß zugespannt ist und das Kraftfahrzeug nicht alleine halten kann. Durch die Lösung der Bremsen kann erreicht werden, dass der Fahrer das Kraftfahrzeug bewegen kann und an einer anderen Position sicher abstellen kann, beispielsweise durch Einlegen eines Ganges.

Wenn alle Aktuatoren die vorgegebene Zuspannkraft erreicht haben, werden im dritten Schritt die Verriegelungsvorrichtungen vorzugsweise im Wesentlichen gleichzeitig betätigt, wodurch sich das Kraftfahrzeug schnellstmöglich in einem verriegelten und gesicherten Zustand befindet.

Um ein unerwünschtes, plötzliches und gefahrenträchtiges Abbremsen eines sich bewegenden Kraftfahrzeuges zu verhindern, wird die Parkbremsfunktion vorteilhafterweise nur dann durchgeführt wird, wenn sich das Kraftfahrzeug im Wesentlichen im Stillstand befindet. Der Stillstand des Kraftfahrzeuges wird beispielsweise aufgrund der Signale von an den Rädern des Kraftfahrzeugs angebrachten Raddrehzahlsensoren erkannt.

Die vorgegebene Zuspannkraft ist vorteilhafterweise für alle Aktuatoren im Wesentlichen gleich gewählt und liegt dabei vorzugsweise in einem Bereich von 5kN bis 30kN, insbesondere von 10kN bis 25kN.

In einer bevorzugten Ausführungsform des Verfahrens für ein Kraftfahrzeug mit einem Bordnetz wird bei der Durchführung der Parkbremsfunktion eine Überprüfung des Bordnetzes des Kraftfahrzeuges durchgeführt.

Eine Überprüfung des Bordnetzes erweist sich als vorteilhaft, da für das Aufbringen der Zuspannkraft der Aktuatoren eine Leistung erforderlich ist, die von dem Bordnetz zur Verfügung gestellt werden muss. Die größte Leistung wird dabei nicht für das Halten der einzustellenden (vorgegebenen) Zuspannkraft benötigt, sondern für das Beschleunigen der Massen (z. B. die Komponenten eines Elektromotors). Eine Überprüfung des Bordnetzes gibt also bereits vor den eigentlichen Zuspannvorgängen Aufschluss darüber, ob gegebenenfalls nicht genug Leistung abrufbar ist, um das gleichzeitige ordnungsgemäße Zuspannen und Verriegeln der Aktuatoren zu bewerkstelligen.

Falls nun die Überprüfung des Bordnetzes ergeben hat, dass es in seiner Funktion beeinträchtigt ist, werden vorteilhafterweise die jeweiligen oben dargestellten Verfahrensschritte ausgeführt und ansonsten, also wenn keine Beeinträchtigung des Bordnetzes vorliegt, durch einen einzigen Verfahrensschritt ersetzt, in dem alle Aktuatoren im Wesentlichen gleichzeitig zugespannt und verriegelt werden. Bei einem voll funktionsfähigen Bordnetz kann auf diese Weise das Kraftfahrzeug problemlos und schnell geparkt bzw. abgestellt werden. Falls andererseits das Bordnetz in seiner Funktion beeinträchtigt ist, werden die Schritte des Verfahrens ausgeführt, wonach die die Aktuatoren nacheinander zugespannt werden, ihre Zuspannkraft überprüft wird, und dann ggf. die Aktuatoren verriegelt werden.

Bei der sequentiellen Zuspannung der Aktuatoren wird so vom Bordnetz jeweils nur die Leistung für einen einzigen Aktuator abgerufen. Die gleichzeitige Zuspannung von beispielsweise zwei Aktuatoren würde in erster Näherung die doppelte Leistung beanspruchen. Das sequentielle Zuspannen der Aktuatoren kann also auch zum Erfolg führen, wenn das Bordnetz nur einen Anteil seiner im Normalzustand verfügbaren Leistung bereitstellen kann. Falls das Bordnetz zusammenbricht, bevor alle Aktuatoren die geforderte Zuspannkraft erreicht haben, wird somit verhindert, dass durch die Verriegelung von nur einigen Aktuatoren das Fahrzeug nur unvollständig abgestellt ist und beispielsweise am Hang anfängt zu rutschen. Bei zusammengebrochenem Bordnetz können andererseits die bereits verriegelten Aktuatoren nicht mehr entriegelt werden, so dass das Fahrzeug nicht unter Kontrolle gebracht werden kann.

In Bezug auf die Bremsanlage wird die oben genannte Aufgabe erfindungsgemäß dadurch gelöst, dass diese ein signalseitig mit den Radbremsen verbundenes Steuergerät zur Ansteuerung der Aktuatoren und der Verriegelungsvorrichtungen umfasst, in welchem ein Verfahren gemäß einem der Ansprüche 1 bis 7 durchgeführt wird.

Vorteilhafterweise ist das Steuergerät als Bremsensteuergerät ausgeführt und steuert die elektromechanischen Aktuatoren zur Ausführung einer Betriebsbremsenfunktion an.

In Bezug auf das Kraftfahrzeug mit einem Bordnetz wird die oben genannte Aufgabe erfindungsgemäß gelöst mit einer oben dargestellten Bremsanlage.

In einer bevorzugten Ausführungsform umfasst das Steuergerät ein Bordnetzüberprüfungsmodul, das elektrisch mit dem Bordnetz des Kraftfahrzeugs verbunden ist. In Kombination oder alternativ dazu ist das Steuergerät signaleingangsseitig mit einem mit dem Bordnetz elektrisch verbundenen Bordnetzüberprüfungsgerät verbunden.

In vorteilhafter Ausführungsform umfasst das Kraftfahrzeug eine Vorderachse und eine Hinterachse und zwei der Hinterachse zugeordnete elektromechanische Radbremsen, die jeweils eine Verriegelungsvorrichtung zur Umsetzung der Parkbremsfunktionalität umfassen, und zwei der Vorderachse zugeordnete hydraulische Bremsen.

Ein Ausführungsbeispiel der Erfindung wird anhand einer Zeichnung näher erläutert. Darin zeigen in stark schematisierter Darstellung:
- FIG. 1: ein Flussdiagramm eines Verfahrens in bevorzugter Ausführungsform,
- FIG. 2: eine Bremsanlage mit zwei Radbremsen, ein Steuergerät, in dem ein Verfahren gemäß FIG. 1 abläuft, sowie ein Bordnetz eines Kraftfahrzeuges, und
- FIG. 3: ein Kraftfahrzeug mit einer Bremsanlage gemäß FIG. 2.

Gleiche Teile sind in allen Figuren mit denselben Bezugszeichen versehen.

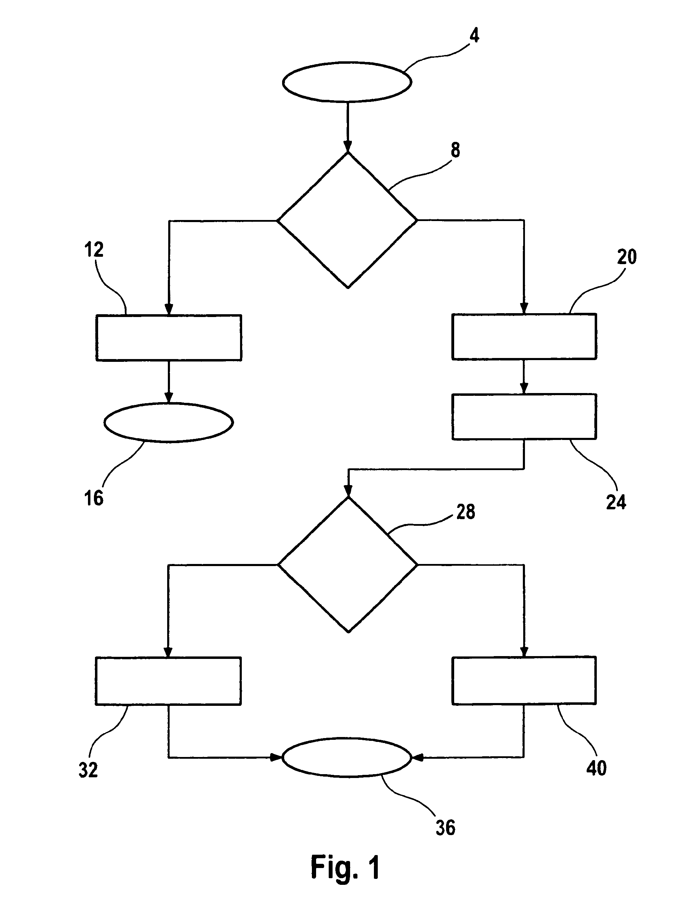

Das erfindungsgemäße Verfahren zum Betreiben einer Bremsanlage in einer bevorzugten Ausführungsform soll anhand des in FIG. 1 dargestellten Flussdiagramms erläutert werden. Die Bremsanlage, die in einem Kraftfahrzeug verbaut sein soll, soll dabei zwei elektromechanisch betätigbare Aktuatoren umfassen, die durch einen Verriegelungsmechanismus eine Parkbremsfunktion bereitstellen.

Das Verfahren startet mit Start 4, an dem der Fahrer des Kraftfahrzeuges eine Parkbremsfunktion durchführt. In Operation bzw. Block 8 wird geprüft, ob das Bordnetz des Kraftfahrzeugs ausreichend funktionstüchtig ist und einwandfrei funktioniert, d. h., ob die (elektrische) Leistung für eine gleichzeitige Betätigung aller Aktuatoren abrufbar ist.

Ist dies der Fall, so werden in Block 12 die beiden Aktuatoren gleichzeitig zugespannt und verriegelt und das Verfahren wird bei Ende 16 beendet.

Ist dies nicht der Fall, so wird in Block 20 zunächst der erste Aktuator auf die gewünschte (vorgegebene) Zuspannkraft zugespannt, jedoch nicht verriegelt. Dann wird in Block 24 der zweite Aktuator auf die gewünschte Zuspannkraft zugespannt, jedoch nicht verriegelt. Durch das sequentielle Zuspannen der beiden Aktuatoren wird bei jedem Zuspannvorgang nur die Leistung für das Zuspannen genau eines Aktuators gefordert. Dadurch kann erreicht werden, dass auch bei einem schwachen Bordnetz die Parkbremse des Kraftfahrzeuges verwendet werden kann.

Fällt das Bordnetz nach dem Zuspannen des ersten Aktuators aus, ist das Fahrzeug trotzdem noch manövrierfähig, da er zu diesem Zeitpunkt noch nicht verriegelt wurde. Vorteilhafterweise werden nicht-selbsthemmende Aktuatoren eingesetzt. Eine Entriegelung des Aktuators ist bei ausgefallenem Bordnetz gewöhnlich nicht möglich.

In Entscheidung 28 wird nun überprüft, ob beide Aktuatoren die vorgegebene geforderte Zuspannkraft erreicht bzw. realisiert haben. Ist dies der Fall, werden in Block 32 beide Aktuatoren gleichzeitig verriegelt. Ist dies nicht der Fall, werden in Block 40 beide Aktuatoren geöffnet. Das Kraftfahrzeug befindet sich nämlich in einem nicht gesicherten Zustand, in dem ein sicheres Abstellen gewährleistet werden kann. Der Fahrer des Kraftfahrzeuges kann nun einen alternativen Abstellort anfahren oder ggf. eine Werkstatt aufsuchen. In beiden Fällen wird das Verfahren bei Ende 36 beendet.

Die Erfindung betrifft ferner ein Verfahren zum Betrieb einer Bremsanlage, insbesondere für Kraftfahrzeuge, mit zumindest zwei jeweils durch einen, insbesondere nicht selbsthemmenden, elektromechanischen Aktuator betätigbaren Radbremsen, welche jeweils eine Verriegelungsvorrichtung zur Umsetzung einer Parkbremsfunktionalität umfassen, bei welcher der elektromechanische Aktuator zunächst betätigt, insbesondere zugespannt, und danach durch die Verriegelungsvorrichtung verriegelt wird, wobei bei der Durchführung einer Parkbremsfunktion zunächst die Aktuatoren nacheinander betätigt, insbesondere zugespannt, werden und entweder eine Betätigung einer Verriegelungsvorrichtung erst dann durchgeführt wird, wenn beide Aktuatoren betätigt, insbesondere auf eine vorgegebene Zuspannkraft zugespannt, sind oder die Verriegelungsvorrichtung des zuerst betätigten, insbesondere zugespannt, Aktuators verriegelt wird, bevor der andere Aktuator betätigt, insbesondere zugespannt, wird. Der zweite Fall ist besonders dann vorteilhaft, wenn das Bordnetz des Kraftfahrzeugs ordnungsgemäß funktioniert.

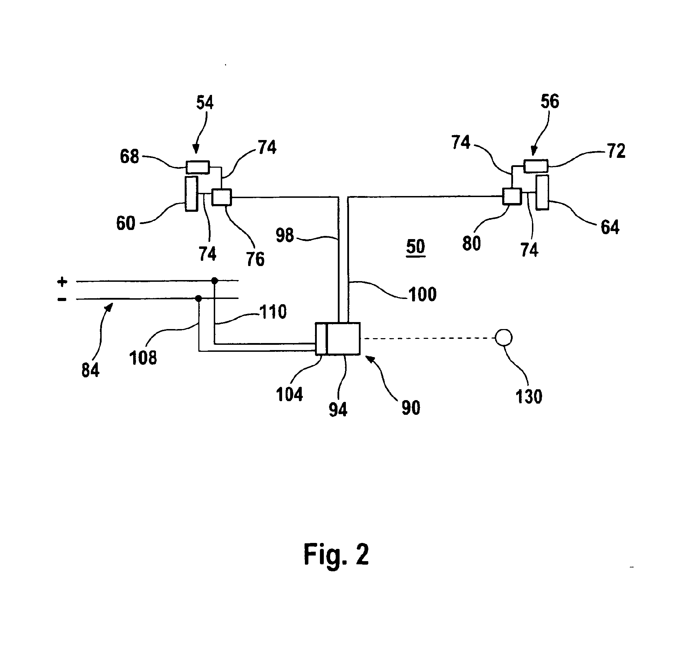

Die in FIG. 2 dargestellte Bremsanlage 50 eines Kraftfahrzeugs (nicht dargestellt) umfasst zwei elektromechanische Bremsen (EMB) 54, 56. Die beiden EMB umfassen jeweils einen Betriebsbremsaktuator 60, 64 sowie eine Verriegelungsvorrichtung in Form eines Feststellbremsaktuators 68, 72. Die Aktuatoren 60, 68 und 64, 72 werden jeweils durch EMB-Steuergeräte 76, 80 über EMB-Signalleitungen 74 angesteuert. Die Betriebsbremsaktuatoren 60, 64 umfassen vorteilhafterweise jeweils einen Elektromotor sowie zumindest ein diesem Elektromotor nachgeschaltetes Getriebe. Die Darstellung der Aktuatoren 60, 64, 68, 72 ist rein schematisch und gibt keine Aufschlüsse über Größe oder räumliche Anordnung der Aktuatoren 60, 64, 68, 72.

In FIG. 2 ist weiterhin dargestellt ein Bordnetz 84 des Kraftfahrzeugs, welches nicht Bestandteil der Bremsanlage 50 ist.

Die Bremsanlage 50 umfasst ein Steuergerät 90, das als Bremsensteuergerät ausgeführt ist. Das Steuergerät 90 umfasst ein Steuermodul 94, welches signalein- und signalausgangsseitig über eine Steuersignalleitung 98 mit dem EMB-Steuergerät 76 und über Steuersignalleitung 100 mit dem EMB-Steuergerät 80 verbunden ist. Das Steuergerät 90 umfasst weiterhin ein Bordnetzüberprüfungsmodul 104, welches elektrisch über Verbindungsleitungen 108, 110 mit dem Bordnetz 84 verbunden ist und im Wesentlichen ein Spannungsüberprüfungsmodul umfasst, durch welches die Spannung des Bordnetzes 84 überprüft wird. Es ist ferner mit einem Parkbremsbedienelement 130 signaleingangsseitig verbunden (dargestellt durch eine gestrichelte Verbindungslinie).

Während des regulären Fahrbetriebs des Kraftfahrzeugs werden bei einem Bremswunsch des Fahrers über das Steuermodul 94 des Steuergerätes 90 die EMB-Steuergeräte 76, 80 angesteuert, die wiederum den Betriebsbremsaktuatoren 60, 64 entsprechende Signale übermitteln, die zu einem dem Fahrerbremswunsch entsprechenden Zuspannen der Betriebsbremsaktuatoren 60, 64 führen. Das Steuergerät 90 ist gewöhnlich mit weiteren Betriebsbremsen des Kraftfahrzeuges signalseitig verbunden, welche hydraulisch oder elektromechanisch ausgebildet sein können (gesetzlich sind zwei unabhängige Bremskreise vorgeschrieben). Die Verbindung zu weiteren Bremsen ist in Figur 2 nicht dargestellt.

In dem Steuergerät 90 ist das in FIG. 1 dargestellte Verfahren software- und/oder hardwaremäßig implementiert. Das Steuergerät 90 ist beispielsweise als Mikrocontroller, Mikroprozessor, oder anwendungsspezifische Schaltung (engl. application specific integrated circuit, ASIC) ausgeführt. Wenn der Fahrer des Kraftfahrzeuges durch Betätigung des Parkbremsbedienelementes 130 einen Wunsch zur Aktivierung der Parkbremse bzw. Parkbremsfunktion äußert, überprüft das Bordnetzüberprüfungsmodul 104 den Zustand des Bordnetzes 84 und führt dazu beispielsweise eine Überprüfung der vorliegenden bzw. anliegenden Spannung durch. Die Überprüfung des Zustandes des Bordnetzes 84 findet vorteilhafterweise auch im Wesentlichen kontinuierlich während der Ausführung der Parkbremsfunktion statt. Falls das Bordnetz 84 einwandfrei funktioniert, wird diese Information vom Bordnetzüberprüfungsmodul 104 dem Steuermodul 94 kommuniziert. Das Steuermodul 94 veranlasst daraufhin - jeweils über die zugehörigen EMB-Steuergeräte 76, 80 - die Betriebsbremsaktuatoren 60, 54, die jeweilige Bremse 54, 56 zuzuspannen und die Feststellbremsaktuatoren 68, 72, die jeweilige Bremse 54, 56 zu verriegeln.

Ergibt die Überprüfung des Bordnetzes 84, dass das Bordnetz 84 in seiner Funktion beeinträchtigt ist und/oder, dass nicht die volle Leistung abgerufen werden kann, steuert das Steuermodul 94 die EMB-Steuergeräte 76, 80 nacheinander (sequentiell an) und befiehlt ihnen, die jeweilige EMB 54, 56 mit Hilfe des jeweiligen Betriebsbremsaktuators 60, 64 zuzuspannen. Beispielsweise wird zuerst das EMB-Steuergerät 76 und dann das EMB-Steuergerät 80 angesteuert.

Alternativ dazu können auch beide EMB-Steuergeräte 76, 80 im Wesentlichen gleichzeitig angesteuert werden, wobei dann beispielweise zuerst das EMB-Steuergerät 76, und dann das EMB-Steuergerät 80 mit einer vorgegebenen Verzögerung den jeweiligen Betriebsbremsaktuator 60 bzw. 64 ansteuert. Das Steuermodul 94 übermittelt den EMB-Steuergeräten jeweils eine vorgegebene Zuspannkraft, die beispielsweise im Steuergerät 90 in einem persistenten Speicher hinterlegt ist oder aus den Umgebungsbedingungen errechnet wird.

Nachdem beide EMB 54, 56 zugespannt worden sind, überprüft das Steuermodul 90 durch Kommunikation mit den EMB-Steuergeräten 76, 80, ob jeweils die vorgegebene Zuspannkraft erreicht worden ist. Haben beide EMB 54, 56 mit der vorgegebenen Zuspannkraft zugespannt, veranlasst das Steuergerät 90 bzw. Steuermodul 94 durch signalseitige Kommunikation mit den EMB-Steuergeräten 76, 80 das (bevorzugt im Wesentlichen gleichzeitige) Verriegeln der EMB 76, 80 durch die Feststellbremsaktuatoren 68, 72. Der Abstellvorgang des Kraftfahrzeugs ist somit abgeschlossen und das Kraftfahrzeug ist in sicherer Weise abgestellt.

In dem Fall, dass die gewünschte Zuspannkraft nicht erreicht wurde, steuert das Steuermodul 94 die EMB-Steuergeräte 76, 80 zum Lösen der Betriebsbremsaktuatoren 60, 64 an. Der Fahrer des Kraftfahrzeugs kann nun das Fahrzeug an einen geeigneten Ort zum sicheren Abstellen bewegen.

Steuermodul 94 und Bordnetzüberprüfungsmodul 104 können auch in integrierter Form als gemeinsames Modul realisiert sein. Ein Modul zur Überprüfung des Bordnetzes kann als Bordnetz-überprüfungsgerät auch getrennt von Steuergerät 90 vorgesehen sein und signalmäßig mit dem Steuergerät 90 kommunizieren.

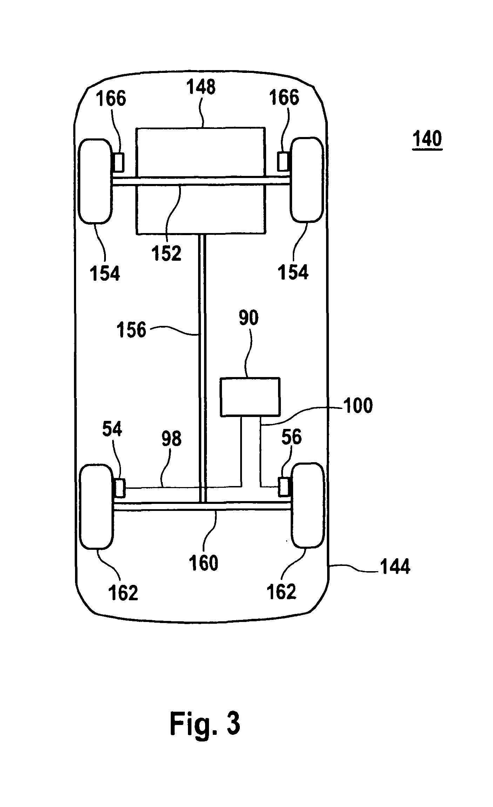

Das in FIG. 3 dargestellte Kraftfahrzeug 140 umfasst eine Karosserie 144, einen Motorblock 148, eine Vorderachse 152 mit zwei Vorderrädern 154 sowie eine von einer Kardanwelle 156 angetriebene Hinterachse 160 mit zwei Hinterrädern 162. Die Vorderräder 154 sind jeweils mit einer hydraulischen Bremse 166 ausgestattet.

Das Kraftfahrzeug 140 ist mit der Bremsanlage 50 gemäß FIG. 2 ausgestattet, wobei in FIG. 3 nur die wesentlichen Komponenten eingezeichnet sind. Dazu gehören die EMB 54, 56, mit denen die Hinterräder 162 ausgestattet sind sowie das Steuergerät 90, welches durch Steuersignalleitungen 98, 100 mit denen EMB 54, 56 bzw. deren EMB-Steuergeräten 76, 80 verbunden ist.

Das in FIG. 3 dargestellte Kraftfahrzeug 140 ist aufgrund seiner Ausrüstung mit der Bremsanlage 50 für einen besonders sicheren Betrieb, insbesondere bei Abstell- und Parkvorgängen, ausgelegt.

### Bezugszeichenliste

- 4: Start
- 8: Entscheidung
- 12: Block
- 16: Ende
- 20, 24: Block
- 26: Entscheidung
- 32: Block
- 36: Ende
- 40: Block
- 50: Bremsanlage
- 54, 56: elektromechanische Bremse (EMB)
- 60, 64: Betriebsbremsaktuator
- 68, 72: Feststellbremsaktuator
- 74: EMB-Signalleitung
- 76, 80: EMB-Steuergerät
- 84: Bordnetz
- 90: Steuergerät
- 94: Steuermodul
- 98, 100: Steuersignalleitung
- 104: Bordnetzüberprüfungsmodul
- 108, 110: Verbindungsleitung
- 130: Parkbremsbedienelement
- 140: Kraftfahrzeug
- 144: Karosserie
- 148: Motorblock
- 152: Vorderachse
- 154: Vorderrad
- 156: Kardanwelle
- 160: Hinterachse
- 162: Hinterrad
- 166: hydraulische Bremse

## Patentansprüche

1. Verfahren zum Betreiben einer Bremsanlage (50), insbesondere einer Bremsanlage (50) in einem Kraftfahrzeug (140), mit wenigstens zwei jeweils durch einen, insbesondere nicht selbsthemmenden, elektromechanischen Aktuator betätigbaren Radbremsen (54, 56), welche jeweils eine Verriegelungsvorrichtung zur Umsetzung einer Parkbremsfunktionalität umfassen, bei welcher der jeweilige elektromechanische Aktuator zunächst zugespannt wird und danach durch die Verriegelungsvorrichtung verriegelt wird, **dadurch gekennzeichnet, dass** bei der Durchführung einer Parkbremsfunktion ein erster Verfahrensschritt durchgeführt wird, bei dem die wenigstens zwei Aktuatoren nacheinander zugespannt werden, und anschließend ein zweiter Verfahrensschritt durchgeführt wird, bei dem überprüft wird, ob die wenigstens zwei Aktuatoren eine jeweils vorgegebene Zuspannkraft aufweisen, und in dem Fall, dass die wenigstens zwei Aktuatoren eine jeweils vorgegebene Zuspannkraft aufweisen, in einem dritten Verfahrensschritt die wenigstens zwei Aktuatoren verriegelt werden.

2. Verfahren nach Anspruch 1, wobei in dem Fall, dass nicht alle Aktuatoren eine vorgegebene Zuspannkraft aufweisen, in einem dritten Schritt alle Aktuatoren gelöst werden.

3. Verfahren nach Anspruch 1, wobei im dritten Schritt die Verriegelungsvorrichtungen im Wesentlichen gleichzeitig betätigt werden.

4. Verfahren nach einem der Ansprüche 1 bis 3, wobei die Parkbremsfunktion nur dann durchgeführt wird, wenn sich das Kraftfahrzeug (140) im Wesentlichen im Stillstand befindet.

5. Verfahren nach einem der Ansprüche 1 bis 4, wobei die vorgegebene Zuspannkraft für alle Aktuatoren im Wesentlichen gleich gewählt ist und in einem Bereich von 5kN bis 30 kN, insbesondere von 10kN bis 25kN, liegt.

6. Verfahren nach einem der Ansprüche 1 bis 5 für ein Kraftfahrzeug (140) mit einem Bordnetz (84), wobei bei der Durchführung der Parkbremsfunktion eine Überprüfung des Bordnetzes (84) des Kraftfahrzeuges (140) durchgeführt wird.

7. Verfahren nach Anspruch 6, wobei, falls die Überprüfung des Bordnetzes (84) ergeben hat, dass es in seiner Funktion beeinträchtigt ist, die jeweiligen Verfahrensschritte ausgeführt werden und ansonsten durch einen einzigen Verfahrensschritt ersetzt werden, in dem alle Aktuatoren im Wesentlichen gleichzeitig zugespannt und verriegelt werden.

8. Bremsanlage (50), insbesondere für Kraftfahrzeuge (140), mit zumindest zwei jeweils durch einen, insbesondere nicht selbsthemmenden, elektromechanischen Aktuator betätigbaren Radbremsen (54, 56), welche jeweils eine Verriegelungsvorrichtung zur Umsetzung einer Parkbremsfunktionalität umfassen, bei welcher der jeweilige elektromechanische Aktuator zunächst betätigt, insbesondere zugespannt, und danach durch die Verriegelungsvorrichtung verriegelt wird, **dadurch gekennzeichnet, dass** diese ein signalseitig mit den Radbremsen verbundenes Steuergerät (90) zur Ansteuerung der Aktuatoren und der Verriegelungsvorrichtungen umfasst, in welchem ein Verfahren gemäß einem der Ansprüche 1 bis 7 durchgeführt wird.

9. Bremsanlage (50) nach Anspruch 9, wobei das Steuergerät (90) als Bremsensteuergerät ausgeführt ist und die elektromechanischen Aktuatoren zur Ausführung einer Betriebsbremsenfunktion ansteuert.

10. Kraftfahrzeug (140) mit einem Bordnetz (84) und mit einer Bremsanlage (50) nach Anspruch 8 oder 9.

11. Kraftfahrzeug (140) nach Anspruch 10, wobei das Steuergerät (90) ein Bordnetzüberprüfungsmodul (104) umfasst, das elektrisch mit dem Bordnetz (84) verbunden ist.

12. Kraftfahrzeug (140) nach Anspruch 10 oder 11, wobei das Steuergerät (90) signaleingangsseitig mit einem mit dem Bordnetz (84) elektrisch verbundenen Bordnetzüberprüfungsgerät verbunden ist.

13. Kraftfahrzeug (140) nach einem der Ansprüche 10 bis 12 mit einer Vorderachse (152) und einer Hinterachse (160) und zwei der Hinterachse (160) zugeordneten elektromechanischen Radbremsen (54, 56), die jeweils eine Verriegelungsvorrichtung zur Umsetzung der Parkbremsfunktionalität umfassen, und zwei der Vorderachse (152) zugeordneten hydraulischen Bremsen (166).

## Claims

1. Method for operating a braking system (50), in particular a braking system (50) in a motor vehicle (140), having at least two wheel brakes (54, 56), each of which can be activated by an electromechanical actuator, in particular a non-self-locking actuator, and which each comprise a locking device for implementing a parking brake functionality, in which locking device the respective electromechanical actuator is firstly actuated and then locked by the locking device, **characterized in that** when a parking brake function is carried out a first method step is carried out in which the at least two actuators are actuated in succession, and subsequently a second method step is carried out in which it is checked whether the at least two actuators have a respectively predefined brake application force, and in the event of the at least two actuators having a respectively predefined brake application force, the at least two actuators are locked in a third method step.

2. Method according to Claim 1, wherein, in the event of all the actuators not having a predefined brake application force, all the actuators are released in a third step.

3. Method according to Claim 1, wherein in the third step the locking devices are essentially activated simultaneously.

4. Method according to one of Claims 1 to 3, wherein the parking brake function is carried out only if the motor vehicle (140) is essentially in the stationary state.

5. Method according to one of Claims 1 to 4, wherein the predefined brake application force is selected to be essentially the same for all the actuators and is in a range from 5 kN to 30 kN, in particular from 10 kN to 25 kN.

6. Method according to one of Claims 1 to 5 for a motor vehicle (140) having an on-board power network (84), wherein when the parking brake function is carried out, the on-board power system (84) of the motor vehicle (140) is checked.

7. Method according to Claim 6, wherein, if the checking of the on-board power system (84) has revealed that its function is compromised, the respective method steps are executed and otherwise replaced by a single method step in which all the actuators are essentially actuated simultaneously and locked.

8. Braking system (50), in particular a braking system (50) in a motor vehicle (140), having at least two wheel brakes (54, 56), each of which can be activated by an electromechanical actuator, in particular a non-self-locking actuator, and which each comprise a locking device for implementing a parking brake functionality, in which locking device the respective electromechanical actuator is at least activated, in particular actuated and then locked by the locking device, **characterized in that** said braking system (50) comprises a control device (90), connected on the signal side to the wheel brakes, for actuating the actuators and the locking devices, in which control device (90) a method according to one of Claims 1 to 7 is carried out.

9. Braking system (50) according to Claim 8, wherein the control device (90) is embodied as a brake control device and actuates the electromechanical actuators in order to execute a service brake function.

10. Motor vehicle (140) having an on-board power system (84) and having a braking system (50) according to Claim 8 or 9.

11. Motor vehicle (140) according to Claim 10, wherein the control device (90) comprises an on-board power system checking module (104) which is electrically connected to the on-board power system (84).

12. Motor vehicle (140) according to Claim 10 or 11, wherein the control device (90) is connected on the signal input side to an on-board power system checking device which is electrically connected to the on-board power system (84).

13. Motor vehicle (140) according to one of Claims 10 to 12, having a front axle (152) and a rear axle (160) and two electromechanical wheel brakes (54, 56) which are assigned to the rear axle (160) and each comprise a locking device for implementing the parking brake functionality, and two hydraulic brakes (166) which are assigned to the front axle (152).

## Revendications

1. Procédé d'exploitation d'un équipement de freinage (50), notamment d'un équipement de freinage (50) dans un véhicule automobile (140), comprenant au moins deux freins de roue (54, 56) pouvant respectivement être actionnés par un actionneur électromécanique, notamment non autobloquant, lesquels comprennent à chaque fois un dispositif de verrouillage destiné à la mise en oeuvre d'une fonctionnalité de frein de stationnement avec laquelle l'actionneur électromécanique correspondant est tout d'abord amené en position d'application du frein et ensuite le dispositif de verrouillage est verrouillé, **caractérisé en ce que** lors de l'exécution d'une fonction de frein de stationnement, une première étape du procédé est exécutée, au cours de laquelle les au moins deux actionneurs sont amenés l'un après l'autre en position d'application du frein et une autre étape du procédé est ensuite exécutée, au cours de laquelle il est vérifié si les au moins deux actionneurs présentent une force d'application du frein à chaque fois prédéfinie et, dans le cas où les au moins deux actionneurs présentent une force d'application du frein à chaque fois prédéfinie, les au moins deux actionneurs sont verrouillés dans une troisième étape du procédé.

2. Procédé selon la revendication 1, selon lequel, dans le cas où tous les actionneurs ne présentent pas une force d'application du frein prédéfinie, tous les actionneurs sont libérés dans une troisième étape.

3. Procédé selon la revendication 1, selon lequel, dans la troisième étape, les dispositifs de verrouillage sont actionnés pour l'essentiel simultanément.

4. Procédé selon l'une des revendications 1 à 3, selon lequel la fonction de frein de stationnement n'est exécutée que lorsque le véhicule automobile (140) se trouve pour l'essentiel immobilisé.

5. Procédé selon l'une des revendications 1 à 4, selon lequel la force d'application du frein prédéfinie est choisie pour l'essentiel identique pour tous les actionneurs et se trouve dans une plage de 5 kN à 30 kN, notamment de 10 kN à 25 kN.

6. Procédé selon l'une des revendications 1 à 5 pour un véhicule automobile (140) muni d'un réseau de bord (84), un contrôle du réseau de bord (84) du véhicule automobile (140) étant effectué lors de l'exécution de la fonction de frein de stationnement.

7. Procédé selon la revendication 6, selon lequel, dans le cas où il a résulté du contrôle du réseau de bord (84) que son fonctionnement est affecté, les étapes respectives du procédé sont exécutées et sinon elles sont remplacées par une unique étape du procédé dans laquelle tous les actionneurs sont pour l'essentiel simultanément amenés en position d'application du frein et verrouillés.

8. Équipement de freinage (50), notamment pour véhicules automobiles (140), comprenant au moins deux freins de roue (54, 56) pouvant respectivement être actionnés par un actionneur électromécanique, notamment non autobloquant, lesquels comprennent à chaque fois un dispositif de verrouillage destiné à la mise en oeuvre d'une fonctionnalité de frein de stationnement avec laquelle l'actionneur électromécanique correspondant est tout d'abord actionné, notamment amené en position d'application du frein, et ensuite le dispositif de verrouillage est verrouillé, **caractérisé en ce que** celui-ci comprend un contrôleur (90) relié côté signal avec les freins de roue pour commander les actionneurs et les dispositifs de verrouillage, dans lequel est mis en oeuvre un procédé selon l'une des revendications 1 à 7.

9. Équipement de freinage (50) selon la revendication 8, dans lequel le contrôleur (90) est réalisé sous la forme d'un contrôleur de freins et commande les actionneurs électromécaniques en vue de l'exécution d'une fonction de freinage de service.

10. Véhicule automobile (140) doté d'un réseau de bord (84) et doté d'un équipement de freinage (50) selon la revendication 8 ou 9.

11. Véhicule automobile (140) selon la revendication 10, dans lequel le contrôleur (90) comprend un module de contrôle du réseau de bord (104) qui est relié électriquement avec le réseau de bord (84).

12. Véhicule automobile (140) selon la revendication 10 ou 11, dans lequel le contrôleur (90) est relié du côté de l'entrée du signal avec un appareil de contrôle du réseau de bord relié électriquement avec le réseau de bord (84).

13. Véhicule automobile (140) selon l'une des revendications 10 à 12, comprenant un essieu avant (152) et un essieu arrière (160) ainsi que deux freins de roue électromécaniques (54, 56) associés à l'essieu arrière (160), lesquels comprennent respectivement un dispositif de verrouillage destiné à la mise en oeuvre de la fonctionnalité de frein de stationnement, et deux freins hydrauliques (166) associés à l'essieu avant (152).
